Europäisches Patentamt

European Patent Office

Office européen des brevets

(19)

(11) Numéro de publication: **0 015 039**
**A1**

(12)

# DEMANDE DE BREVET EUROPEEN

(21) Numéro de dépôt: **80200138.8**

(22) Date de dépôt: **18.02.80**

(51) Int. Cl.³: **E 04 F 15/16**
**A 47 G 27/00, C 09 J 5/00**

(30) Priorité: **19.02.79 BE 193554**

(43) Date de publication de la demande:
**03.09.80 Bulletin 80/18**

(84) Etats Contractants Désignés:
**AT CH DE FR GB IT LU NL SE**

(71) Demandeur: **Société anonyme dite: Etablissements Louis de Poortere S.A.**
**Rue de la Royenne**
**B-7700 Mouscron(BE)**

(72) Inventeur: **Maddens, Ignace Edouard Victor**
**40, rue de la Barrière Leclercq**
**B-7760 Mouscron-Dottignies(BE)**

(74) Mandataire: **Pirson, Jean et al,**
**C/O Bureau GEVERS S.A. 7, rue de Livourne**
**B-1050 Brussels(BE)**

(54) **Procédé de pose de produit de recouvrement à dossier mousse sur un support et recouvrements ainsi obtenus.**

(57) Procédé de pose de produit de recouvrement à dossier mousse sur un support comprenant l'étalement d'une couche intermédiaire (2) à mailles directement sur la surface du support (1), l'encollage de la face supérieure de la couche intermédiaire de manière à permettre le passage de la matière adhésive (5) au travers des mailles de la couche intermédiaire jusqu'au support, et l'application du produit de recouvrement (6) à dossier mousse (7) sur la couche adhésive.

Croydon Printing Company Ltd.

"Procédé de pose de produit de recouvrement à dossier mousse sur un support et recouvrements ainsi obtenus"

La présente invention est relative à un procédé de pose de produit de recouvrement à dossier mousse sur un support comprenant l'introduction, entre le dossier mousse du produit de recouvrement et le support, d'une couche intermédiaire présentant des mailles et l'utilisation d'une matière adhésive pour coller ces éléments au support, ainsi qu'aux recouvrements ainsi obtenus.

A l'heure actuelle, la pose des moquettes à dossier mousse s'effectue par encollage direct du sol qui, selon les règles de l'art, doit être sec, plan, stable, sans fissures et propre. On applique ensuite la moquette sur le lit de colle. Ce procédé soulève de nombreux problèmes au moment où la moquette usée doit être remplacée et où l'on procède par conséquent à sa dépose par pelage. En effet, lors de ce pelage, la mousse du dossier de la moquette reste totalement ou partiellement accrochée au sol. Il est alors nécessaire, pour éliminer les restes de mousse, de faire appel soit à des appareils de décapage coûteux, soit à des solvants d'usage dangereux et difficiles à éliminer du sol avant l'application du revêtement ultérieur.

On connaît également un procédé de pose de moquette à dossier mousse tel que celui décrit au préambule, dans lequel on a préalablement préparé la couche intermédiaire sous la forme d'un filet imprégné sur ses deux faces d'une colle de contact et revêtu ensuite sur chaque face encollée d'une feuille de polyéthylène. Ce procédé comprend l'enlèvement d'une des feuilles de polyéthylène du filet et l'application de la surface découverte sur le dossier mousse de la moquette, puis l'enlèvement de l'autre des feuilles de polyéthylène du filet et l'application de l'ensemble filet-moquette sur le sol. Ce procédé permet certes d'éviter les inconvénients qui surgissaient lors de la dépose de la moquette dans le procédé décrit précédemment. Cependant, ce procédé est compliqué et coûteux puisqu'il demande la préparation d'un produit intermédiaire, à savoir le filet auto-collant sur ses deux faces, et l'utilisation de feuilles de protection en polyéthylène.

La présente invention à pour but de réaliser un procédé de pose de produit de recouvrement à dossier mousse sur un support qui à la fois permette d'éviter les inconvénients précités qui apparaiessent au moment de la dépose et soit plus simple et moins coûteux que le procédé comprenant l'utilisation₀ d'un filet intermédiaire tel que décrit ci-dessus.

Suivant l'invention, on résout ces problèmes par un procédé tel que décrit au préambule, ce procédé étant caractérisé en ce qu'il comprend l'étalement de la couche intermédiaire à mailles directement sur la surface du support, l'encollage de la face supérieure de la couche intermédiaire de manière à permettre le passage de la matière adhésive au travers des mailles de la couche intermédiaire jusqu'au support, et l'application du produit de recouvrement à dossier mousse sur la couche de matière adhésive.

Suivant une forme de réalisation de l'invention, la couche intermédiaire présente des fils liaisonnés aux points d'entrecroisement qui forment des mailles d'une dimension suffisante pour permettre, lors de l'encollage, le passage susdit de matière adhésive.

Suivant une forme particulière de réalisation de l'invention, la couche intermédiaire présente une résistance à la traction suffisante pour résister à la force de traction nécessaire au pelage du produit de recouvrement lors de sa dépose à partir du support.

Suivant une forme de réalisation avantageuse de l'invention, on applique, au cours de l'encollage, uniquement la quantité de matière adhésive par unité de surface nécessaire, selon la nature de cette matière adhésive, pour obtenir un bon pouvoir collant du produit de recouvrement sur le support lorsque ce produit de recouvrement n'est pas destiné à être soumis au passage de dispositifs roulants, tels que des chaises à roulettes.

Fait également partie du cadre de la présente invention tout recouvrement de support comprenant une couche intermédiaire à mailles en contact direct, par une de ses faces, avec le support et une couche de matière adhésive, située entre l'autre des faces de la couche intermédiaire et le dossier mousse du produit de recouvrmeent et en contact avec le support au travers des mailles de la couche intermédiaire.

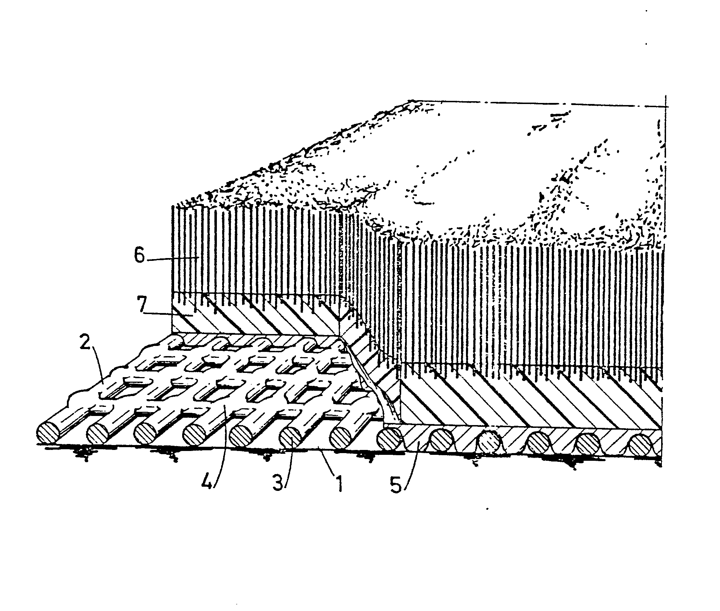

D'autres détails et particularités de l'invention ressortiront de la description d'un exemple de réalisation de l'invention, donné ci-après à titre non limitatif et avec référence à la figure unique annexée qui représente une vue en perspective, partiellement en coupe, d'un recouvrement obtenu suivant l'invention et donc d'une couche intermédiaire à mailles appropriée pour la mise en oeuvre de l'invention.

Sur un sol 1 préparé selon les règles de l'art, c'est-à-dire sec, plan, stable, sans fissures et propre, on étale directement un tissu 2 formé de fils 3 en matière synthétique ou métallique, liaisonnés aux points d'entrecroisement 4 et présentant des mailles d'une dimension suffisante pour permettre le passage d'une matière adhésive 5 au travers des mailles lors de l'encollage du tissu. Une ouverture de mailles de l'ordre de 2 x 2 mm à 3 x 4 mm s'est avérée avantageuse. Ce tissu doit aussi présenter une résistance suffisante pour résister à la force de traction nécessaire au pelage du produit de recouvrement usé, lors de sa dépose à partir du sol. Cette résistance est de préférence de l'ordre de 63 à 77 kg en chaîne et de l'ordre de 59 à 71 kg en trame.

Comme tissu approprié on peut par exemple utiliser celui qui porte la dénomination commerciale de Traliglas 96 et qui est mis sur le marché par la firme Syncoglas. Ce tissu en fibres de verre présente les caractéristiques techniques suivantes :

largeur de lé : 115 cm

poids        : 60gr/m²

résistance à la traction en chaîne  :  70 kg

résistance à la traction en trame   :  65 kg

nombre de fils en chaîne            :  380 x 2/m

nombre de fils en trame        ·     :  385/m

ouverture des mailles               :  2 x 2 mm

nombre de mailles                   :  146.300/m²

Il est bien entendu nécessaire que, lors de la pose des lés de ce tissu sur le sol, les lés voisins se superposent sur 2 à 3 cm à l'endroit des joints. Lorsque le sol à recouvrir 1 est totalement couvert de ce tissu à mailles 2 on procède à l'encollage de sa surface supérieure. On utilise comme matière adhésive 5 n'importe quelle colle mise sur le marché dans ce but. Lors de la vente de ces colles, les fabricants fournissent simultanément les quantités de colle à appliquer. Ils fournissent généralement deux mesures, l'une correspondant à la quantité de colle nécessaire pour obtenir un bon pouvoir collant du produit de recouvrement sur le support, lorsque le produit de recouvrement n'est pas destiné à être soumis au passage de dispositifs roulants, tels que des chaises à roulettes, et l'autre à la quantité de colle nécessaire, lorsque le produit de recouvrement est destiné à être soumis au passage de telles chaises à roulettes. Ces quantités varient selon la nature de la colle et elles sont généralement, pour une même colle, égales dans le deuxième cas précité, au double de la quantité nécessaire pour le premier cas précité. Par exemple, dans le cas de la colle mise sur le marché par la firme Rousselot sous la dénomination commerciale de Cirodor-Novafix, 300 g/m² de colle sont nécessaires dans le premier cas et 600 g/m² de colle dans le deuxième cas.

Dans le procédé de pose suivant l'invention, au cours de l'encollage, on applique uniquement la quantité de matière adhésive nécessaire, selon la nature de cette matière adhésive, pour obtenir un bon pouvoir collant du produit de recouvrement sur le support lorsque le produit de recouvrement n'est pas destiné à subir le passage de dispositifs roulants, tels que des chaises à roulettes. On appliquera donc de l'ordre de 270 à 330 g/m², de préférence 300 g/m², de la colle précitée sur le tissu à mailles.

Par-dessus ce lit de colle 5 on applique ensuite le produit de recouvrement 6 à dossier mousse 7, par exemple une moquette à dossier mousse.

Ce recouvrement de sol comprend donc un tissu à mailles 2 en contact direct, par une de ses faces, avec le sol 1 et une couche de colle 5 située entre l'autre des faces de ce tissu à mailles 2 et le dossier mousse 7 de la moquette 6, cette couche de colle 5 étant aussi en contact avec le sol 1 au travers des mailles du tissu 2.

On a soumis ce recouvrement à deux essais.

Essai de vieillissement :

On pose sur un sol une moquette selon le procédé suivant l'invention et, à titre comparatif, on pose des moquettes avec un tissu à mailles intermédiaire, mais avec des quantités de la colle précitée supérieures à celles prévues suivant l'invention (450 g et 600 g/m²), et une moquette sans tissu à mailles, mais avec une quantité de colle identique à celle employée dans le procédé suivant l'invention.

| | quantité de colle | Force de traction nécessaire pour le pelage | |
|---|---|---|---|
| | | après 72 h de séchage | après 21 jours de séchage à 75-80°C |
| avec tissu à mailles | 300 gr/m² | 4,0 kg | 6,0 kg |
| | 450 gr/m² | 5,5 kg | 12,0 kg |
| | 600 gr/m² | 7,5 kg | adhésion trop forte |
| sans tissu à mailles | 300 gr/m² | 4,5 kg | 3,0 kg |

Ainsi qu'il ressort du tableau ci-dessus, l'adhésion avec 450 g/m² de colle devient trop forte après l'essai de vieillissement qui consiste à soumettre artificiellement les moquettes à des températures de 75 à 80°C pendant 21 jours. En effet lors du pelage une partie du dossier mousse reste collée au sol. Cette adhésion est déjà trop forte après 72h de séchage avec 600g/m² de colle et elle est insuffisante dans l'essai sans tissu à mailles après l'essai de vieillissement, et la moquette n'adhère plus bien.

Essai à la chaise à roulettes.

On soumet une moquette suivant l'invention à la rotation d'un dispositif à roulettes pendant 25.000 tours, ce dispositif reproduisant la sollicitation à laquelle les moquettes sont soumises par des chaises à roulettes par exemple. Une moquette avec un tissu à mailles mais présentant une quantité de la colle précitée de plus de 330 g/m² est soumise à ce même essai. Alors que, dans ce dernier cas, la mousse du dossier reste collée au sol lors du pelage, la moquette suivant l'invention est aisément pelée sans laisser de résidus et elle supporte bien l'essai en question, ce qui n'est pas le cas d'une moquette posée sans tissu à mailles avec une quantité de colle identique.

Il résulte de ces essais qu'on obtient, par le procédé de pose suivant l'invention, et donc avec une utilisation de 300 g/m² pour la colle précitée, un bon pouvoir collant, même lors de fortes sollicitations mécaniques, et simultanément une capacité de pelage sans résidus de mousse au cours de la dépose.

Il doit être entendu que la présente invention n'est en aucune façon limitée à la forme de réalisation décrite ci-dessus et que bien des modifications peuvent y être apportées sans sortir du cadre du présent brevet.

Il est évident que l'on peut utiliser d'autres matières adhésives que celle donnée en exemple et que les quantités appliquées seront modifiées en fonction de la nature de cette matière adhésive.

Le tissu intermédiaire pourra évidemment également être d'une nature différente de celui donné en exemple pour autant qu'il présente les propriétés décrites.

REVENDICATIONS.

1. Procédé de pose de produit de recouvrement à dossier mousse sur un support comprenant l'introduction, entre le dossier mousse du produit de recouvrement et le support, d'une couche intermédiaire présentant des mailles et l'utilisation d'une matière adhésive pour coller ces éléments au support, caractérisé en ce qu'il comprend l'étalement de la couche intermédiaire à mailles directement sur la surface du support, l'encollage de la face supérieure de la couche intermédiaire de manière à permettre le passage de la matière adhésive au travers des mailles de la couche intermédiaire jusqu'au support, et l'application du produit de recouvrement à dossier mousse sur la couche de matière adhésive.

2. Procédé de pose suivant la revendication 1, caractérisé en ce que la couche intermédiaire présente des fils liaisonnés aux points d'entrecroisement, qui forment des mailles d'une ouverture suffisante pour permettre, lors de l'encollage, le passage susdit de matière adhésive.

3. Procédé de pose suivant la revendication 2, caractérisé en ce que les mailles de la couche intermédiaire sont d'une ouverture de l'ordre de 2 x 2 mm à 3 x 4 mm.

4. Procédé de pose suivant l'une quelconque des revendications 1 à 3, caractérisé en ce que la couche intermédiaire présente une résistance à la traction suffisante pour résister à la force de traction nécessaire au pelage du produit de recouvrement, lors de sa dépose, à partir du support.

5. Procédé de pose suivant la revendication 4, caractérisé en ce que la résistance à la traction de la couche intermédiaire est de préférence de l'ordre de 63 à 77 kg en chaîne et de 59 à 71 kg en trame.

6. Procédé de pose suivant l'une quelconque des revendications 1 à 5, caractérisé en ce que la couche intermédiaire présente un poids de l'ordre de 54 à 66 g/m².

7. Procédé de pose suivant l'une quelconque des revendications 1 à 6, caractérisé en ce que la couche intermédiaire est une filet en matière synthétique, de préférence en fibres de verre.

8. Procédé de pose suivant l'une quelconque des revendications 1 à 7, caractérisé en ce que, au cours de l'encollage, on applique uniquement la quantité de matière adhésive par unité de surface nécessaire, selon la nature de cette matière adhésive, pour obtenir un bon pouvoir collant du produit de recouvrement sur le support lorsque le produit de recouvrement n'est pas destiné à être soumis au passage de dispositifs roulants, tels que des chaises à roulettes.

9. Recouvrement de support, comprenant un produit de recouvrement à dossier mousse, une couche de matière adhésive et une couche intermédiaire présentant des mailles, située entre le support et le dossier mousse du produit de recouvrement, caractérisé en ce que la couche intermédiaire est par une de ses faces en contact direct avec le support et en ce que la couche de matière adhésive est située entre l'autre des faces de la couche intermédiaire et le dossier mousse du produit de recouvrement, et est en contact avec le support au travers des mailles de la couche intermédiaire.

10. Recouvrement de support, suivant la revendication 9, caractérisé en ce que la couche intermédiaire présente des fils liaisonnés aux points d'entrecroisement qui forment des mailles d'une ouverture suffisante pour permettre, lors de l'encollage, le passage susdit de matière adhésive.

11. Recouvrement de support suivant la revendication 10, caractérisé en ce que les mailles de la couche intermédiaire sont d'une ouverture de l'ordre de 2 x 2 mm à 3 x 4 mm.

12. Recouvrement de support suivant l'une quelconque des revendications 9 à 11, caractérisé en ce que la couche intermédiaire présente une résistance à la traction suffisante pour résister à la force de traction nécessaire au pelage du produit de recouvrement lors de sa dépose à partir du support.

13. Recouvrement de support suivant la revendication 12, caractérisé en ce que la résistance à la traction de la couche intermédiaire est de préférence de l'ordre de 63 à 77 kg en chaîne et de 59 à 71 kg en trame.

14. Recouvrement de support suivant l'une quelconque des revendications 9 à 13, caractérisé en ce que la couche intermédiaire présente un poids de l'ordre de 54 à 66 g/m².

15. Recouvrement de support suivant l'une quelconque des revendications 9 à 14, caractérisé en ce que la couche intermédiaire est un filet en matière synthétique, de préférence en fibres de verre.

16. Recouvrement de support suivant l'une quelconque des revendications 9 à 15, caractérisé en ce que la couche de matière adhésive comprend uniquement la quantité de matière adhésive par unité de surface nécessaire, selon la nature de cette matière adhésive, pour obtenir un bon pouvoir collant du produit de recouvrement sur le support lorsque ce produit de recouvrement n'est pas destiné à être soumis au passage de dispositifs roulants, tels que chaises à roulettes.

Office européen
des brevets

**RAPPORT DE RECHERCHE EUROPEENNE**

Numéro de la demande

EP 80 20 0138

| | DOCUMENTS CONSIDERES COMME PERTINENTS | | CLASSEMENT DE LA DEMANDE (Int. Cl.3) |
|---|---|---|---|
| Catégorie | Citation du document avec indication, en cas de besoin, des parties pertinentes | Revendication concernée | |
| P,A | DE - U1 - 7 905 528 (H. DIX)<br>* revendication 1; page 2, lignes 16 à 19; page 3, lignes 1 à 11 *<br>-- | | E 04 F 15/16<br>A 47 G 27/00<br>C 09 J 5/00 |
| A | DE - A1 - 2 718 443 (J.F. ADOLFF AG)<br>* revendications 1, 5; fig. 1 à 3 *<br>-- | | |
| A | DE - A - 1 683 713 (VEB BAU- UND MONTA-GEKOMBINAT ERFURT)<br>* page 3 *<br>-- | | **DOMAINES TECHNIQUES RECHERCHES (Int. Cl.3)** |
| A | FR - A - 1 488 012 (SCHAEFFLER TEPPICH-BODEN GMBH)<br>* fig. *<br>-- | | A 47 G 27/00<br>C 09 J 5/00<br>E 04 F 15/16 |
| A | FR - A - 2 115 673 (OMNIUM DE PROSPEC-TIVE INDUSTRIELLE)<br>* revendications 1 à 3 *<br>---- | | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X Le présent rapport de recherche a été établi pour toutes les revendications

| Lieu de la recherche<br>Berlin | Date d'achèvement de la recherche<br>07-05-1980 | Examinateur<br>v. WITTKEN |
|---|---|---|

OEB Form 1503.1   06.78